# EUROPEAN PATENT SPECIFICATION

(11) **EP 3 257 565 B1**
(45) Date of publication and mention of the grant of the patent: **16.10.2019**
(21) Application number: 15881435.0
(22) Date of filing: 04.05.2015
(51) Int. Cl.: B01D 17/02, B01D 17/022, B01D 17/032, B01D 19/00, B01D 17/12

(54) **METHOD AND APPARATUS FOR STRENGTHENING OIL-WATER SEPARATION AND COUPLED DESALTING FUNCTIONS IN COLD LOW PRESSURE SEPARATOR**
VERFAHREN UND VORRICHTUNG ZUR VERSTÄRKUNG DER ÖL-WASSER-TRENNUNG UND GEKOPPELTE ENTSALZUNGSFUNKTIONEN IN KALTEM NIEDERDRUCKTRENNER
PROCÉDÉ ET APPAREIL DE RENFORCEMENT DE FONCTIONS COUPLÉES DE SÉPARATION PÉTROLE-EAU ET DE DESSALAGE DANS UN SÉPARATEUR À FROID BASSE PRESSION

(30) Priority: 09.02.2015 CN 201510066396
(43) Date of publication of application: 20.12.2017
(73) Proprietor: East China University Of Science And Technology, Shanghai 200237 (CN)
(72) Inventor: YANG, Qiang, Shanghai 200237 (CN); LU, Hao, Shanghai 200237 (CN); LIU, Sen, Shanghai 200237 (CN); WANG, Chaoyang, Shanghai 200237 (CN); XU, Xiao, Shanghai 200237 (CN)
(74) Representative: Keil & Schaafhausen Patent- und Rechtsanwälte PartGmbB
(86) International application number: PCT/CN2015/000302
(87) International publication number: WO 2016/127273

(56) References cited:
- CN-A- 103 706 149
- CN-A- 103 964 545
- CN-U- 203 763 912
- CN-U- 203 947 077
- CN-U- 204 034 328
- CN-U- 204 447 409
- CN-Y- 201 415 069
- JP-A- 2004 160 412
- US-A1- 2003 150 324
- US-A1- 2011 139 625

## Description

### Technical Field

This invention involves the field of petroleum refining or coal chemical industry. In particular, the instant invention relates to a method and a device for enhanced oil-water separation and desalination in a cold low-pressure separator.

### Background

In a hydrogenation unit, a low-pressure separator works on the basis of equilibrium vaporization in distillation. In other words, the pressure is reduced for the feedstock in a certain way, and gas and liquid in the feedstock are rapidly separated in the space of one vessel under a certain temperature and a certain pressure to obtain corresponding gas and liquid products. The low-pressure separator functions to separate the gas components from the liquid components contained in the feedstock supplied to a cold high-pressure separator so that part of the gas components are evaporated to reduce the gas load of the fractionation system. The low-pressure separator also functions, in view of the high content of hydrogen sulfide in the gas components, to remove part of the hydrogen sulfide from the low-pressure separator so as to reduce equipment corrosion in the fractionation system.

Currently, the gravity settler is conventionally adopted for separation in a low-pressure separator. During the separation, there are three problems as follows. (1) Liquid-gas separating effect is poor because the scattered tiny bubbles separated through flash evaporation under reduced pressure can't be effectively eliminated during the gravity settling and will be carried into acidic water or the fractionated oil, causing gas (mainly hydrogen) loss and increased downstream load. (2) Gravity settling is adopted for oil-water separation for 10 minutes or longer but the separating effect is poor with large area occupied by the settling unit. (3) The quality of oil product is worsened and thus more salt and hydrogen sulfide are contained in the fractionated oil, which results in a bad water-removing effect on the fractionated oil and also serious corrosion in downstream steam stripping and distillation units. Desalination function has not been taken into consideration in current design of the low-pressure separator (e.g. CN203763912U). Therefore, it is necessary to adopt new efficient technology to optimize the current low-pressure separator.

### Summary of the Invention

In consideration of the foregoing problems, this invention provides a method and a device for enhanced oil-water separation with desalination in a cold low-pressure separator. With the method and the device, enhanced oil-water separation is carried out, taking advantage of material characteristics and flow field regulation. Meanwhile, water is injected to wash and remove hydrogen sulfide and salts contained in oil, to further enhance oil-water separation and effectively remove the salts in an efficient way, which will compensate for the deficiencies of the conventional cold low-pressure separator.

The instant invention provides a method for enhanced oil-water separation and desalination in a cold low-pressure separator, comprising the steps of
1) mixing water-containing oil with desalted water at entrance to transfer salts and hydrogen sulfide in the oil to the desalted water, and flowing the resultant oil-water mixture into a T-shaped liquid-gas separator to rapidly separate gas from the oil-water mixture via flash evaporation, wherein the oil has a pressure of 0.6-4.5MPa and a temperature of 20-90°C at the entrance, and the desalted water is injected in such a rate that the injected desalted water accounts for 0-1% of the water-containing oil by volume;
2) subjecting the oil-water mixture to secondary washing by injected water, and then flow rectification distribution and then subjecting the oil-water mixture to a primary separation phase to separate water having a droplet size over 30µm, wherein a hydrophilic droplet agglomeration module and a CPI fast separation module are used in the preliminary separation, the hydrophilic droplet agglomeration module is adopted to rapidly agglomerate the water droplets scattering in oil, and the CPI fast separation module performs rapid oil-water separation, the separated water is automatically discharged from bottom by an oil-water interface level controller, or alternatively enters a deep separation chamber through ports at both sides of a partition while oil with a trace of water flows through the partition for next processing step, wherein the water injected in the secondary washing accounts for 0-0.5% of the oil-water mixture, the conditioned oil-water mixture flows in a flow velocity of 0.005-0.05m/s, and space between each two adjacent corrugated plates in the CPI module is 5-18mm; and
3) after the oil with trace water enters a deep separation phase, subjecting the oil with trace water to gravity settling followed by deep water removal by a conjugated fiber water removal module containing hydrophilic fibers and oleophilic fibers to separate water droplets having a size of 3-30µm, automatically discharging the resultant oil after deep water removal by a liquid level controller while subjecting the separated water to a conjugated fiber oil removal module containing hydrophilic fibers and oleophilic fibers to obtain water containing less than 100mg/L of oil and then automatically discharging the resultant water by an oil-water interface level controller, wherein water droplets with larger size are settled down during the gravity settling to bottom and then into a water pack;
wherein the amount of the hydrophilic fibers is 5 to 15% of that of the oleophilic fibers in the conjugated fiber water removal module; the amount of the oleophilic fibers is 10 to 20% of that of the hydrophilic fibers in the conjugated fiber oil removal module.

The desalted water is injected in step 1) in a direction that is the same with or opposite to the oil's flowing direction. The injected water is dispersed in the oil with a droplet size of 10 to 50µm. The amount of the injected desalted water can be adjusted depending on the salt content in the oil.

The flow rate of the oil-water mixture at entrance of the T-shaped liquid-gas separator in step 1) is from 3 to 6m/s.

In the secondary washing in step 2), the water is injected in a direction opposite to the oil's flowing direction by a jet and a pipe. The injected water is dispersed in oil in a droplet size of 30 to 100µm.

The hydrophilic droplet agglomeration module and the CPI fast separation module mentioned in step 2) are made of modified Teflon, polypropylene or stainless steel material.

The conjugated fiber water/oil removal module mentioned in step 3) adopts weaving type described in Chinese patent publication 103952853A.

The instant invention also provides a device for enhanced oil-water separation and desalination for carrying out the method of the instant invention, comprising a casing, an oil-water-gas inlet disposed on the casing, an injector and a T-shaped liquid-gas separator (or a rotational flow degasser) separately connected with the oil-water-gas inlet; a second injector, a flow rectification distributor, an oil-water agglomeration module, a CPI fast separation module, an oil-water interface level controller, a partition, a liquid level controller, and an oil outlet, which are disposed within the casing in said order, with the oil outlet disposed at posterior end of the casing; a liquid eliminator disposed on bottom of the casing, a gas outlet on top of the casing, and a water outlet on the bottom of the casing.

The oil outlet, the gas outlet and the water outlet are provided with a regulating valve, respectively.

An oil-water interface level controller is disposed inside the liquid eliminator.

The above mentioned casing is a horizontal type or a vertical type casing.

The beneficial effects of this invention are as follows.
(1) The technology using the T-shaped liquid-gas separator is adopted in this invention. The gas is quickly removed from the liquid by applying the centrifugal force of the liquid in the tube of the T-shaped separator to the gas evaporated due to reduced pressure. In this respect, a higher separation efficiency than gravity settling separation is realized using a simple configuration. In another aspect, water is injected prior to the entry to the T-shaped separator. When the flow rate of the oil at the entrance of T-shaped tube is controlled to 3 to 6m/s, uniformly dispersed water drops get influenced by centrifugal force in the tube of the T-shaped separator. Due to different densities of oil and water, water drops moves from center to periphery on the transverse section and from top to bottom on longitudinal section to further remove salts. The water droplets with a size of 10 to 50µm are not likely to break or get emulsified under the centrifugal force, making it optimized for subsequent efficient separation.
(2) A second water injection is adopted. On one hand, water volume to be injected is reduced and deep desalting is realized. On the other hand, fast separation of oil from water can be improved. Flow bias exists if water is only injected once, and the residence time is short in the separation process using the T-shaped tube. Thus, a part of oil is not sufficiently washed by the water. The salts will be removed again by water injected for the second time. Moreover, the size of water droplets is controlled at 30 to 100µm during the second water injection and these water droplets are in dispersed state. Such water droplets can quickly gather on the surface of baffle plate in the agglomeration module to form a water film. Small water droplets carried by oil such as the water droplets with a size less than 30µm can combine with the water film to from big liquid droplets to improve the coalescence property of the agglomerated water droplets.
(3) The rough water removal and further water removal are performed in one casing. Water droplets whose particle sizes are larger than 30µm are mainly removed before the oil-water mixture enters the partition. Conjugated fibers are used to realize deep water removal after the mixture passes the partition. The amount of the hydrophilic fibers is 5 to 15% of that of the oleophilic fibers in the conjugated fiber water removal module. In the meantime of maintaining low pressure settlement (it is easy for oil to penetrate the fibrous layer through oleophilic fibers), deep separation of water droplets are realized (a part of emulsified oil droplets carry tiny water droplets and this part of water droplets are stopped and separated by hydrophilic fibers). Deep water removal can be realized stepwisely. What is more important, water removal from oil can be done in less than 3 minutes now by this design, which usually takes 10 minutes or longer. The speed is fast and efficiency is high. Less devices are used and the system supporting cost is lowered.
(4) Three technologies, i.e., degasification, salt removal by injected water and enhanced oil-water separation, are combined together to provide a much better effect. Swirling flow in degassing process realizes degasification and salt exclusion and also rough oil-water separation. The second water injection process improves salt removal and also improves oil-water separation due to water absorption by large-sized water droplets. The different flow rate and route of the oil and the also promotes salt exclusion and separation to some extent. Thus, this invention makes a coupled design of the above three technologies to enable the function and also enhance the property.
(5) For oil having a relatively low content of oil, the jet for water injection can be closed. The water flows from the left side of partition to the water pack using the connecting vents at left and right sides of partition. The presence of the partition helps to preliminarily separate of oil and water into different layers so that the fluctuation of the water content in oil will not lead to the increase of oil content at the oil outlet.

The device of this invention has is small in land occupation and has a high rate and efficiency in oil-water separation. It enhances the degassing and water removal properties of the conventional technology and adds desalting function at the same time. It can be widely used in low-pressure separation process in petroleum refining and also the separation process involving reflux tank at the tower top.

### Brief Description of Drawings

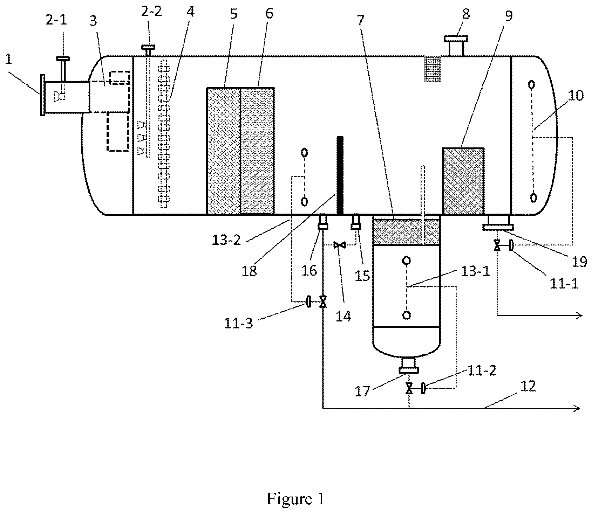

Figure 1 is a drawing showing the device of Example 1 for enhancing oil-water separation and desalination in a low-pressure separator.

### Description of numeral symbols

1: Oil-water-gas inlet; 2-1 & 2-2: water injection port; 3: T-shaped liquid-gas separator; 4: flow rectification distributor;
5: Oil-water agglomeration module; 6: CPI fast separation module; 7: Deep oil removal module;
8: Gas outlet; 9: Deep water removal module; 10: Liquid level controller; 11-1, 11-2 & 11-3: Regulating value;
12: Water mixture outlet; 13-1 & 13-2: Interface level controller; 14: Coupling valve; 15: Water returning port;
16: Water outlet 1; 17: water outlet 2; 18: Partition; 19: Oil outlet;

### Detailed Description of Embodiments

The method and the device of this invention will be described below with reference to the Example. The example only makes further explanation of this invention and does not limit the protective scope of this invention.

### Example 1

As shown in Figure 1, a device for enhancing oil-water separation and desalination in a low-pressure separator contained a casing, an oil-water-gas inlet 1 set on the casing, an water injection port 2-1 and a T-shaped liquid-gas separator 3 (or a rotational flow degasser) that separately connect with the oil-water-gas inlet 1; a second injector (comprising a water injection port 2-2), a flow rectification distributor 4, an oil-water agglomeration module 5, a CPI fast separation module 6, an (oil-water) interface level controller 13-1, an (oil-water) interface level controller 13-2, a partition 18, a liquid level controller 10 and an oil outlet 19, which were disposed within the casing in said order with the oil outlet set on the posterior part of the casing; a deep oil removal module 7 set on the bottom of casing and a gas outlet 8 in the top of the casing; and a water outlet 17 set on the bottom of the casing. Regulating valves 11-1, 11-2 and 11-3 are provided on the oil outlet 10, the water outlet 17 and the water outlet 16, respectively.

The casing can be horizontal or vertical. Horizontal type was adopted in Example 1.

A part of gas was evaporated due to the reduced pressure after oil entered via the oil-water-gas inlet 1. The oil-water-gas contacted with desalted water having a droplet size of 10 to 50µm injected from water injection port 2-1 in counter current to perform initial salt removal. Fast separation of liquid from gas was done in the T-shaped liquid-gas separator. Because the T-shaped liquid-gas separator made fast separation of liquid from gas through centrifugal force realized by the tangential inlet, water droplets injected from water injection port moved outward gradually on the transverse section of the T-shaped separator and moved downward on the longitudinal section under the centrifugal force to complete secondary salt removal in addition to gas-liquid separation. The oil-water mixture entered into the low pressure separator from lower outlet of the T-shaped separator.

The oil-water mixture flowed from left to right and mixed with and washed by the 30 to 50µm desalted water injected from water injection port 2-2. Deep salt removal was done during this period. Then, the resultant flow entered the flow rectification distributor 4 for distribution so that the oil-water mixture would be uniformly distributed on the transverse section of the vessel. The flow rate of the oil-water mixture was 0.005 to 0.05m/s after flow distribution. The oil-water mixture entered the oil-water agglomeration module 5 for differential flowing among baffle plates of the agglomeration module. Due to hydrophilia of the surface of agglomeration baffle plate, large water droplets in oil-water mixture formed a water film rapidly on the surface of plate which further absorbed small water droplets in the oil to realize water droplet coalescence. After this process, the oil-water mixture entered the CPI fast separation module 6 and performed an initial water removal process rapidly based on water settlement in shallow pools of multiple corrugated plates. Water droplets with particle size larger than 30µm were separated efficiently in this process. An oil-water interface was formed at the left side of the partition 18. The adjusting valve 11-3 was opened by the interface level controller 13-2 and the water passed the water outlet 16 and the water mixture outlet 12 to complete water excretion while oil passed through the partition 18 for the deep water removal process.

The water entering the deep water removal zone generally had a droplet size less than 30µm. A section for natural settlement area is set on the right side of clapboard at first to make settling separation of some small water drops that can be settled to tank bottom and then water bag. In addition, in spite of fluctuation of oil-water separation or water-carrying fluctuation at entrance in last process, dash adjustment can be done at this section; Afterwards, oil-water mixture containing tiny water drops enters into deep dehydration module 9 where hydrophilic fibers take up 5 to 15% of oleophilic fibers. In the meantime of maintaining low pressure settlement (it is easy for oil to penetrate fibrous layer through oleophilic fibers), deep separation of water drops are realized (a part of emulsified water drops carry tiny water drops and this part of water drops are intercepted and separated by hydrophilic fibers); Intercepted water drops enter into water bag through coalescence of hydrophilic fibers and form oil-water surface layer in water bag in the form of free settling after deoiling treatment through deep deoiling module constituted by conjugate fibers. Adjusting valve 11-2 is opened by surface controller 13-1 and oil-water enters into water-phase mixed outlet 12 from water-phase outlet 17 to complete water excretion; Oil-phase excretion is completed at oil-phase outlet 19 through regulating valve 11-1 controlled by liquid-level controller 10.

Furthermore, if salt content in oil is relatively low and it is not necessary to make water injection and salt exclusion or injected water volume is less than 0.5%, coupling cock 14 shall be opened and water will enter into water bag to complete excretion.

Table 1 is property and operating parameters of cold low pressure separator of hydrogenation unit in an oil refinery.

**Table 1**

| Item | Technological operation data |
|---|---|
| Name of material | Oil gas, oil, H₂S, hydrogen and water |
| Total flow | 37000 kg/h |
| Gas phase | 2703 kg/h |
| Oil phase | 34184 kg/h |
| Water phase | 113 kg/h |
| Temperature | 50 °C |
| Operating pressure | 3.0MPa |
| Gas-phase density | 22.835 kg/m³ |
| Oil-phase density | 685.992 kg/m³ |
| Chloridion content | 80µg/g |
| H₂S content in liquid-phase | 0.6253% (W) |
| Hydrogen concentration in liquid-phase | 0.0236% (W) |

According to the above operating parameters, a gravity settling tank whose diameter is 2000mm and tangent length is 5800mm is designed in original cold low pressure separator to make three-phase separation of oil, water and gas. After half year of operation, it is found that water content in oil-phase outlet exceeds 2000ppm frequently, oil content of water in water-phase outlet exceeds 1000ppm, and severe corrosion of stripping tower and fractionating tower after passing through cold low pressure separator exits, which brings about problems to long period and economical efficiency of the device. Thus, the technology in this invention is adopted to make transformation of this process.

General requirement of transformation: water content of oil at exit is less than 300ppm, oil content in water is less than 200ppm, and salt deposition and corrosion of stripping tower and fractionating tower are eliminated after cold low pressure separation to guarantee long-term operation.

### Technological calculation of transformation:

(1) Technological parameter: that diameter of device is 1600mm and tangent length is 3600mm is calculated according to 0.02m/s liquid flow rate, 50% of average height of liquid level and 180s standing time; Due to tiny salt content and corrosion found after half year of operation, one-off water injection is designed and injected water volume is 0.5% of oil-phase flow.
(2) Form of internals: T-shaped liquid-gas separator is adopted at entrance ad flow rate at entrance is controlled to 4.8m/s to satisfy the requirement on mixing and separation of oil and water in the meantime of fluid degassing; 316L stainless steel baffle plate is used by water-drop coarse grained module 5 to make coarse graining of water drops. CPI module adopts modified PP corrugated plate. Distance between plates is controlled to 10mm and percentage of opening at recession is 3% to meet fast settlement after coalescence of water drops; Deep dehydration module 7 adopts nylon, Teflon and module weaved by both 316L stainless steel and fiber, and mass proportion of three substances is 2:7:1; Deep deoiling module 7 adopts glass fiber, Teflon fiber and module weaved by both 316L stainless steel and fiber, and mass proportion of three substances is 6:3:1.
(3) Water drainage control: water injection rate is 0.5% and water volume is relatively big, which exceeds the processing capacity of drainage exit 17. Thus, Simultaneous water drainage of drainage exit 16 and drainage 17 is controlled by surface gauge; Height of liquid level is controlled to 60% by liquid-level controller to make excretion of oil phase.

Implementation effect indicates that after the method in this invention is adopted for transformation, hydrogen content of oil in cold low pressure separator is lowered to 22%, oil content of water at exit is 80 to 180ppm, water content of oil at exit is 210 to 290ppm, and chloridion content is lowered to 11µg/g. By contrast of original gravity settling separation technology, it has the following beneficial effects.
(1) Hydrogen content in oil is lowered but hydrogen recovery is improved. Gas-phase load at the top of downstream fractionating tower is lowered but economic benefit is improved;
(2) Oil content of water and water content of oil at exit meet design requirements and eliminate the problem brought to downstream device due to water in oil and oil in water;
(3) Chloridion content at oil-outlet and corrosion rate of downstream stripping tower and fractionating tower are lowered but continuous running period of device is improved;
(4) Less land occupation of device has a certain economic benefit.

## Claims

1. A device for enhanced oil-water separation and desalination comprising:
- a casing, an oil-water-gas inlet (1) located on the casing,
- an water injection port (2-1) and a T-shaped liquid-gas separator (3), which is a rotational flow degasser, wherein the water injection port (2-1) and the T-shaped liquid-gas separator (3) are separately connected with the oil-water-gas inlet (1) and the water injection port (2-1) is located before the T-shaped liquid-gas separator (3);
- a second injector comprising a water injection port (2-2), a flow rectification distributor (4), a hydrophilic droplet agglomeration module (5) comprising baffle plates, a corrugated plate interceptor (CPI) fast separation module (6), an oil-water interface level controller (13-2), a partition (18), a deep water removal module (9) which is a conjugated fiber water removal module containing hydrophilic fibers and oleophilic fibers, a liquid level controller (10), which are disposed within the casing in said order, wherein the amount of the hydrophilic fibers is 5 to 15% of that of the oleophilic fibers in the conjugated fiber water removal module (9);
- a deep oil removal module (7), which is a conjugated fiber oil removal module containing hydrophilic fibers and oleophilic fibers, located on the bottom of the casing and a gas outlet (8) at the top of the casing, wherein the amount of the oleophilic fibers is 10 to 20% of that of the hydrophilic fibers in the conjugated fiber oil removal module (7) and an oil-water interface level controller (13-1) is located below the deep oil removal module (7) and wherein the oil removal module (7) is positioned at a height lower than the deep water removal module (9); and
- an oil outlet (19) located on the posterior part of the casing, a water outlet (16) located on the bottom of the casing and a water outlet (17) located below the oil-water interface level controller (13-1), wherein the water outlet (16) is located before the partition (18) and both of the water outlets are led to a water mixture outlet (12), and wherein regulating valves (11-1, 11-2 and 11-3) are provided on the oil outlet (19), the water outlet (17) and the water outlet (16) respectively and the regulating valves (11-1, 11-2 and 11-3) are controlled by the level controllers (10, 13-1 and 13-2) respectively.

2. The device of claim 1, **characterized in that** the gas outlet (8) is provided with a regulating valve.

3. The device of claim 1, wherein, the casing is a horizontal typed or a vertical typed casing.

4. A method for enhanced oil-water separation and desalination in a device according to claims 1 to 3 , comprising the steps of:
1) mixing water-containing oil with desalted water at the entrance to transfer salts and hydrogen sulfide in the oil to the desalted water, and flowing the resultant oil-water mixture into the T-shaped liquid-gas separator (3) to rapidly separate gas from the oil-water mixture via flash evaporation, wherein the oil has a pressure of 0.6-4.5MPa and a temperature of 20-90°C at the entrance, and the desalted water is injected in such a rate that the injected desalted water accounts for 0-1% of the water-containing oil by volume;
2) subjecting the oil-water mixture to secondary washing by injected water and then flow rectification distribution and then subjecting the oil-water mixture to a primary separation phase to separate water having a droplet size over 30µm, wherein the hydrophilic droplet agglomeration module (5) and the CPI fast separation module (6) are used in the preliminary separation, wherein the hydrophilic droplet agglomeration module (5) is adopted to rapidly agglomerate the water droplets scattering in oil, and the CPI fast separation module (6) performs rapid oil-water separation, the separated water is automatically discharged from bottom by an oil-water interface level controller (13-2), or alternatively enters a deep separation chamber through ports at both sides of the partition (18) while oil with trace water flows through the partition (18) for the next processing step, wherein the water injected in the secondary washing accounts for 0-0.5% of the oil-water mixture, the conditioned oil-water mixture flows in a flow velocity of 0.005-0.05m/s, and space between each two adjacent corrugated plates in the CPI module (6) is 5-18mm; and
3) after the oil with trace water enters a deep separation phase, subjecting the oil with trace water to gravity settling followed by deep water removal by the conjugated fiber water removal module (9) containing hydrophilic fibers and oleophilic fibers to separate water droplets having a size of 3-30µm, automatically discharging the resultant oil after deep water removal by the liquid level controller (10) while subjecting the separated water to a conjugated fiber oil removal module (7) containing hydrophilic fibers and oleophilic fibers to obtain water containing less than 100mg/L of oil and then automatically discharging the resultant water by the oil-water interface level controller (13-1), wherein water droplets with larger size are settled down during the gravity settling to bottom and then into a water pack;

5. The method of claim 4, wherein the desalted water is injected in step 1) in a direction that is the same with or opposite to the oil's flowing direction, and the injected water is dispersed in the oil with a droplet size of 10 to 50µm.

6. The method of claim 4, wherein the oil-water mixture flows in a velocity of 3 to 6m/s at entrance of the T-shaped liquid-gas separator (3) in step 1).

7. The method of claim 4, wherein, the water is injected in the secondary washing of step 2) in a direction opposite to the oil's flowing direction by a jet and a pipe, and the injected water is dispersed in oil with a droplet size of 30 to 100µm.

8. The method of claim 4, wherein the hydrophilic droplet agglomeration module (5) and the CPI fast separation module (6) in step 2) are made of modified Teflon, polypropylene or stainless steel material.

## Patentansprüche

1. Vorrichtung für die verbesserte Öl-Wasser-Trennung und Entsalzung, umfassend:
- ein Gehäuse, einen Öl-Wasser-Gas-Einlass (1), der sich an dem Gehäuse befindet,
- eine Wasserinjektionsöffnung (2-1) und einen T-förmigen Flüssigkeit-Gas-Separator (3), der ein Rotationsströmungsentgaser ist, wobei die Wasserinjektionsöffnung (2-1) und der T-förmige Flüssigkeit-Gas-Separator (3) separat mit dem Öl-Wasser-Gas-Einlass (1) verbunden sind und die Wasserinjektionsöffnung (2-1) sich vor dem T-förmigen Flüssigkeit-Gas-Separator (3) befindet;
- einen zweiten Injektor, der eine Wasserinjektionsöffnung (2-2), einen Strömungsberichtigungsverteiler (4), ein hydrophiles Tröpfchenansammlungsmodul (5), das Prallbleche umfasst, ein Wellenplattenabscheider-(WPA) Schnelltrennungsmodul (6), einen Öl-Wasser-Grenzflächenniveauregler (13-2), eine Trennwand (18), ein tiefes Wasserentfernungsmodul (9), das ein Wasserentfernungsmodul konjugierter Fasern ist, das hydrophile Fasern und oleophile Fasern enthält, einen Flüssigkeitsniveauregler (10) umfasst, die innerhalb des Gehäuses in dieser Reihenfolge angeordnet sind, wobei die Menge der hydrophilen Fasern 5 bis 15 % derjenigen der oleophilen Fasern in dem Wasserentfernungsmodul (9) konjugierter Fasern beträgt;
- ein tiefes Ölentfernungsmodul (7), das ein Ölentfernungsmodul konjugierter Fasern ist, das hydrophile Fasern und oleophile Fasern enthält, sich am Boden des Gehäuses und sich ein Gasauslass (8) oben am Gehäuse befindet, wobei die Menge der oleophilen Fasern 10 bis 20 % derjenigen der hydrophilen Fasern in dem Wasserentfernungsmodul (9) konjugierter Fasern beträgt und ein Öl-Wasser-Grenzflächenniveauregler (13-1) sich unter dem tiefen Ölentfernungsmodul (7) befindet und wobei das Ölentfernungsmodul (7) in einer Höhe positioniert ist, die niedriger als das tiefe Wasserentfernungsmodul (9) liegt; und
- einen Ölauslass (19), der sich am hinteren Teil des Gehäuses befindet, einen Wasserauslass (16), der sich am Boden des Gehäuses befindet, und einen Wasserauslass (17) der sich unter dem Öl-Wasser-Grenzflächenniveauregler (13-1) befindet, wobei der Wasserauslass (16) sich vor der Trennwand (18) befindet und beide der Wasserauslässe zu einem Wassermischungsauslass (12) führen und wobei die Regulierventile (11-1, 11-2 und 11-3) auf dem Ölauslass (19), dem Wasserauslass (17) bzw. dem Wasserauslass (16) bereitgestellt sind und die Regulierventile (11-1, 11-2 und 11-3) jeweils durch die Niveauregler (10, 13-1 und 13-2) reguliert werden.

2. Vorrichtung nach Anspruch 1, **dadurch gekennzeichnet, dass** der Gasauslass (8) mit einem Regulierventil ausgestattet ist.

3. Vorrichtung nach Anspruch 1, wobei das Gehäuse ein Gehäuse vom Horizontaltyp oder vom Vertikaltyp ist.

4. Verfahren für die verbesserte Öl-Wasser-Trennung und Entsalzung in einer Vorrichtung nach den Ansprüchen 1 bis 3, umfassend die Schritte des:
1) Mischens von wasserhaltigen Öl mit entsalztem Wasser am Einlass, um Salze und Schwefelwasserstoff in dem Öl zum entsalzten Wasser zu überführen und Strömenlassen der resultierenden Öl-Wasser-Mischung in den T-förmigen Flüssigkeit-Gas-Separator (3), um Gas schnell von der Öl-Wasser-Mischung durch Flash-Verdampfung zu trennen, wobei das Öl einen Druck von 0,6-4,5 MPa und eine Temperatur von 20-90 °C am Einlass aufweist und das entsalzte Wasser mit einer derartigen Rate injiziert wird, dass das injizierte entsalzte Wasser 0-1 % des wasserhaltigen Öls, auf das Volumen bezogen, ausmacht;
2) Unterwerfens der Öl-Wasser-Mischung einem sekundären Waschen durch injiziertes Wasser und dann Strömungsberichtigungsverteilens und dann Unterwerfens der Öl-Wasser-Mischung einer primären Trennungsphase, um Wasser abzutrennen, das eine Tröpfchengröße über 30 µm aufweist, wobei das hydrophile Tröpfchenansammlungsmodul (5) und das WPA-Schnelltrennungsmodul (6) bei der vorläufigen Trennung verwendet werden, wobei das hydrophile Tröpfchenansammlungsmodul (5) übernommen wird, um die Wassertröpfchen, die in Öl zerstreut sind, schnell zu agglomerieren und das WPA-Schnelltrennungsmodul (6) eine schnelle Öl-Wasser-Trennung ausführt, das abgetrennte Wasser automatisch vom Boden durch einen Öl-Wasser-Grenzflächenniveauregler (13-2) abgelassen wird oder alternativ in eine tiefe Trennungskammer durch Öffnungen an beiden Seiten der Trennwand (18) eintritt, während Öl mit Spuren von Wasser durch die Trennwand (18) zum nächsten Verarbeitungsschritt strömt, wobei das Wasser, das in den zweiten Waschvorgang injiziert wird, 0-0,5 % der Öl-Wasser-Mischung ausmacht, die konditionierte Öl-Wasser-Mischung mit einer Strömungsgeschwindigkeit von 0,005-0,05 m/s strömt und der Abstand zwischen jeweils zwei nebeneinanderliegenden Wellenplatten in dem WPA-Modul (6) 5-18 mm beträgt; und
3) nachdem das Öl mit Spuren von Wasser in eine tiefe Trennungsphase eintritt, Unterwerfens des Öls mit Spuren von Wasser einem Schwerkraftabsetzen, gefolgt von Tiefwasserentfernung durch das Wasserentfernungsmodul (9) konjugierter Faser, das hydrophile Fasern und oleophile Fasern enthält, um Wassertröpfchen abzuscheiden, die eine Größe von 3-30 µm aufweisen, automatisch Ablassens des resultierenden Öls nach der Tiefwasserentfernung durch den Flüssigkeitsniveauregler (10), während das abgetrennte Wasser einem Ölentfernungsmodul konjugierter Fasern (7), das hydrophile Fasern und oleophile Fasern enthält, unterworfen wird, um Wasser zu erhalten, das weniger als 100 mg/l Öl enthält und dann automatisch Ablassens des resultierenden Wassers durch den Öl-Wasser-Grenzflächenniveauregler (13-1), wobei Wassertröpfchen mit größerer Größe während des Schwerkraftabsetzens sich am Boden und dann in eine Wasserpackung absetzen.

5. Verfahren nach Anspruch 4, wobei das entsalzte Wasser in Schritt 1) in einer Richtung injiziert wird, die dieselbe wie die Strömungsrichtung des Öls oder ihr entgegengesetzt ist und das indizierte Wasser in dem Öl mit einer Tröpfchengröße von 10 bis 50 µm dispergieren wird.

6. Verfahren nach Anspruch 4, wobei die Öl-Wasser-Mischung mit einer Geschwindigkeit von 3 bis 6 m/s am Einlass des T-förmigen Flüssigkeit-Gas-Separators (3) in Schritt 1) strömt.

7. Verfahren nach Anspruch 4, wobei das Wasser in den sekundären Waschvorgang von Schritt 2) in einer Richtung, die der Strömungsrichtung des Öls entgegengesetzt ist, durch eine Düse und eine Röhre injiziert wird und das injizierte Wasser in Öl mit einer Tröpfchengröße von 30-100 µm dispergiert wird.

8. Verfahren nach Anspruch 4, wobei das hydrophile Tröpfchenansammlungsmodul (5) und das WPA-Schnelltrennungsmodul (6) in Schritt 2) aus modifiziertem Teflon, Polypropylen oder Edelstahlmaterial hergestellt sind.

## Revendications

1. Dispositif pour la séparation et la désalinisation de pétrole-eau augmentées comprenant :
- un boîtier, une entrée de pétrole-eau-gaz (1) située sur le boîtier,
- une porte d'injection d'eau (2-1) et un séparateur de liquide-gaz en forme de T (3), qui est un dégazeur à écoulement rotatif, où la porte d'injection (2-1) et le séparateur de liquide-gaz en forme de T (3) sont connectés séparément avec l'entrée de pétrole-eau-gaz (1) et la porte d'injection d'eau (2-1) est située avant le séparateur de liquide-gaz en forme de T (3) ;
- un second injecteur comprenant une porte d'injection d'eau (2-2), un distributeur de rectification d'écoulement (4), un module d'agglomération de gouttelettes hydrophiles (5) comprenant des plaques de déflecteur, un module de séparation rapide (6) d'intercepteur de plaque ondulée (CPI), une commande de niveau d'interface pétrole-eau (13-2), une cloison (18), un module d'enlèvement d'eau profonde (9) qui est un module d'enlèvement d'eau de fibres conjuguées contenant des fibres hydrophiles et des fibres oléophiles, une commande de niveau de liquide (10), qui sont disposés dans le boîtier dans ledit ordre, où la quantité des fibres hydrophiles est de 5 à 15 % de celle des fibres oléophiles dans le module d'enlèvement d'eau de fibres conjuguées (9) ;
- un module d'enlèvement de pétrole profond (7), qui est un module d'enlèvement de pétrole de fibres conjuguées contenant des fibres hydrophiles et des fibres oléophiles, situé sur la partie inférieure du boîtier et une sortie de gaz (8) à la partie supérieure du boîtier, où la quantité des fibres oléophiles est de 10 à 20 % de celle des fibres hydrophiles dans le module d'enlèvement de pétrole de fibres conjuguées (9) et une commande de niveau d'interface pétrole-eau (13-1) est située au-dessous du module d'enlèvement de pétrole profond (7) et où le module d'enlèvement de pétrole (7) est positionné à une hauteur inférieure à celle du module d'enlèvement d'eau profonde (9) ; et
- une sortie de pétrole (19) située sur la partie postérieure du boîtier, une sortie d'eau (16) située sur la partie inférieure du boîtier et une sortie d'eau située sur la partie inférieure du boîtier et une sortie d'eau (17) située au-dessous de la commande de niveau d'interface pétrole-eau (13-1), où la sortie d'eau (16) est située avant la cloison (18) et les deux des sortie d'eau sont conduites à une sortie de mélange d'eau (12), et où des vannes de régulation (11-1, 11-2 et 11-3) sont fournies sur la sortie de pétrole (19), la sortie d'eau (17) et la sortie d'eau (16) respectivement et les vannes de régulation (11-1, 11-2 et 11-3) sont commandées par les commandes de niveau (10, 13-1 et 13-2) respectivement.

2. Dispositif selon la revendication 1, **caractérisé en ce que** la sortie de gaz (8) est pourvue d'une vanne de régulation.

3. Dispositif selon la revendication 1, dans lequel, le boîtier est d'un type horizontal ou d'un type vertical.

4. Procédé pour la séparation et la désalinisation de pétrole-eau augmentées dans un dispositif selon les revendications 1 à 3, comprenant les étapes consistant à :
1) mélanger du pétrole contenant de l'eau avec de l'eau dessalée à l'entrée pour transférer les sels et le sulfure d'hydrogène dans le pétrole à l'eau dessalée, et écouler le mélange pétrole-eau résultant dans le séparateur de liquide-gaz (3) pour séparer rapidement le gaz du mélange pétrole-eau via une évaporation instantanée, où le pétrole a une pression de 0,6 à 4,5 MPa et une température de 20 à 90 °C à l'entrée, et l'eau dessalée est injectée à une vitesse telle que l'eau dessalée injectée rend compte de 0 à 1 % du pétrole contenant de l'eau par volume ;
2) soumettre le mélange pétrole-eau à un lavage secondaire par de l'eau injectée puis une distribution de rectification d'écoulement puis soumettre le mélange pétrole-eau à une phase de séparation primaire pour séparer l'eau ayant une taille de gouttelette de plus de 30 µm, où le module d'agglomération de gouttelettes hydrophiles (5) et le module de séparation rapide de CPI (6) sont utilisés dans la séparation préliminaire, où le module d'agglomération de gouttelettes hydrophiles (5) est adopté pour agglomérer rapidement les gouttelettes d'eau diffusant dans le pétrole, et le module de séparation rapide de CPI (6) effectue une séparation pétrole-eau rapide, l'eau séparée est automatiquement déchargée de la partie inférieure par une commande de niveau d'interface pétrole-eau (13-2), ou en variante entre dans une chambre de séparation profonde par des portes des deux côtés de la cloison (18) alors que le pétrole avec de l'eau à l'état de traces s'écoule à travers la cloison (18) pour l'étape de traitement suivante, où l'eau injectée dans le lavage secondaire rend compte de 0 à 0,5 % du mélange pétrole-eau, le mélange pétrole-eau conditionné s'écoule à une vitesse d'écoulement de 0,005 à 0,05 m/s, et l'espace entre chacune de deux plaques ondulées adjacentes dans le module de CPI (6) est de 5 à 18 mm ; et
3) après que le pétrole avec de l'eau à l'état de traces est entré dans une phase de séparation profonde, soumettre le pétrole avec l'eau à l'état de traces à une sédimentation par gravité suivie par un enlèvement d'eau profonde par le module d'enlèvement d'eau de fibres conjuguées (9) contenant des fibres hydrophiles et des fibres oléophiles pour séparer les gouttelettes d'eau ayant une taille de 3 à 30 µm, déchargeant automatiquement le pétrole résultant après l'enlèvement d'eau profonde par la commande de niveau de liquide (10) tout en soumettant l'eau séparée à un module d'enlèvement de pétrole de fibres conjuguées (7) contenant des fibres hydrophiles et des fibres oléophiles pour obtenir de l'eau contenant moins de 100 mg/L de pétrole puis de décharger automatiquement l'eau résultante par la commande de niveau d'interface de pétrole-eau (13-1), où les gouttelettes d'eau avec une taille plus grande sont sédimentées durant la sédimentation par gravité à la partie inférieure puis dans un pack d'eau.

5. Procédé selon la revendication 4, dans lequel l'eau dessalée est injectée dans l'étape 1) dans une direction qui est la même que ou opposée à la direction de l'écoulement du pétrole, et l'eau injectée est dispersée dans le pétrole avec une taille de gouttelette de 10 à 50 µm.

6. Procédé selon la revendication 4, dans lequel le mélange pétrole-eau s'écoule à une vitesse de 3 à 6 m/s à l'entrée du séparateur de liquide-gaz en forme de T (3) dans l'étape 1).

7. Procédé selon la revendication 4, dans lequel, l'eau est injectée dans le lavage secondaire de l'étape 2) dans une direction opposée à la direction d'écoulement du pétrole par un jet et un tuyau, et l'eau injectée est dispersée dans le pétrole avec une taille de gouttelette de 30 à 100 µm.

8. Procédé selon la revendication 4, dans lequel le module d'agglomération de gouttelettes hydrophiles (5) et le module de séparation rapide de CPI (6) dans l'étape 2) sont constitués de téflon modifié, de polypropylène ou d'un matériau d'acier inoxydable.
